# EUROPEAN PATENT SPECIFICATION

(11) **EP 2 821 316 B1**
(45) Date of publication and mention of the grant of the patent: **26.04.2017**
(21) Application number: 14175833.4
(22) Date of filing: 04.07.2014
(51) Int. Cl.: B62B 9/08, B60B 33/00

(54) **Caster and stroller**
Rolle und Kinderwagen
Roulette et poussette

(30) Priority: 05.07.2013 JP 2013142106
(43) Date of publication of application: 07.01.2015
(73) Proprietor: Combi Corporation, Taito-ku, Tokyo (JP)
(72) Inventor: Funakura, Kenji, Taito-ku, Tokyo (JP)
(74) Representative: Liesegang, Eva

(56) References cited:
- WO-A1-2008/055831
- US-A- 4 985 960
- US-A1- 2009 242 343

## Description

### TECHNICAL FIELD

The present invention relates to a stroller caster and a stroller that are excellent in operationnality for restricting rotation of a wheel.
More particularly, the present invention relates to a caster including the features of the preamble of claim 1. A caster of this type is known from WO2008/055831A.

### BACKGROUND ART

A stroller (a cater for a stroller) caster is used as a holding mechanism for holding a wheel which not only allows a wheel to be rotated about a rotation axis line, but also allows the wheel and an axle holding the wheel to be turned about a caster axis line extending in a direction not parallel with the rotation axis line. The stroller caster is configured to turn the wheel and the axle about the caster axis line, in accordance with a direction of motive force applied by an operator to a stroller. Thus, the operator can achieve an intended turning of the stroller.

As disclosed in EP1484229A2, for example, a stroller caster includes a fixed part fixed on a leg of a stroller, and a turning part rotatably supporting a wheel and capable of turning the wheel about a caster axis line with respect to the fixed part. In such a caster, in order that rotation of the wheel can be restricted independent of a position of the turning part with respect to the fixed part, a braking mechanism is provided on the turning part.

### DISCLOSURE OF THE INVENTION

However, in a conventional stroller, it is sometimes difficult to operate the braking mechanism disposed on the turning part, depending on the position of the turning part with respect to the fixed part. The present invention has been made in view of the above circumstances. The object of the present invention is to provide a caster excellent in operationality for restricting rotation of a wheel, and a stroller including the caster.

The present invention provides a caster including the features of claim 1. Embodiments of the caster are defined in the dependent claims.

In the caster according to the present invention,
the fixed block may include a fixed block body fixed to the leg of the stroller, and a shaft member extending downward from the fixed block body;
the turning block may include a tubular holding part through which the shaft member of the fixed block passes; and
the switching member may be located to pass through the shaft member such that the switching member is slidable with respect to the shaft member.

In the caster according to the present invention,
the shaft member may be fixed to the fixed block body through a fixing pin passing through the shaft member;
the switching member may include a shaft part passing through the shaft member; and
the shaft part may have a through-hole formed as an elongate hole extending in a direction parallel with the caster axis line, with the fixing pin passing through the through-hole.

In the caster according to the present invention,
the shaft member may include a cylindrical body part having a cylindrical shape, and a flange part disposed on a lower end of the cylindrical body part, the flange part extending from the cylindrical body part in order to increase a diameter; and
the flange part may be located to face a lower end of the tubular holding part of the turning block, along a direction parallel with the caster axis line.

In the caster according to the present invention,
an annular bottom-plate part may be formed on a lower end of the tubular holding part of the turning block, the annular bottom-plate part extending from the tubular holding part in order to reduce a diameter; and
a bush through which the shaft member passing may be disposed at a position facing the tubular holding part of the turning block and the annular bottom-plate of the turning block.

In the caster according to the present invention,
the switching member includes a shaft part extending along the caster axis line, and an engagement planar part fixed to the shaft part and extending in a direction not parallel with the caster axis line; and
in accordance with the movement of the switching member along the caster axis line, the locking member is pressed by the engagement planar part of the switching member so as to be relatively moved with respect to the turning block.

In the caster according to the present invention, the engagement planar part may have a discoid shape.

In the caster according to the present invention, the locking member may include a projecting piece projecting to a position facing the engagement planar part along a direction parallel with the caster axis line.

In the caster according to the present invention, the locking member may be movable with respect to the turning block in a direction parallel with the caster axis line.

In the caster according to the present invention,
the locking member may include a locking body part relatively movable with respect to the turning block, and a locking pin held on the locking body part;
the turning block may include a casing accommodating the locking body part such that the locking body part is movable therein;
the casing may have a through-hole through which the locking pin passes, the through-hole extending in a relative moving direction of the locking body part with respect to the turning block; and
when the locking member is located at the locked position, the locking pin may be engaged with the wheel so as to restrict the rotation of the wheel, and when the locking member may be located at the unlocked position, the locking pin is disengaged from the wheel.

In the caster according to the present invention,
the locking body part may be supported movably with respect to the casing, and has a tubular shape having both ends that are opened in the moving direction of the locking body part;
a holding member may be disposed such that at least a part of the holding member is positioned inside the locking body part; and
the axle may pass through the casing and the holding member.

In the caster according to the present invention,
the casing may have a through-hole through which the axle passes, the through-hole extending in the relative moving direction of the locking body part with respect to the casing; and
the holding member may be movable, together with the axle held by the holding member, with respect to the casing in a direction parallel with the relative moving direction of the locking body part with respect to the casing.

In the caster according to the present invention, the holding member may have a through-hole extending in the moving direction of the locking body part, with the locking pin passing through the through-hole.

In the caster according to the present invention, the locking body part may have a cutout into which the axle moves in accordance with the movement of the locking body part.

In the caster according to the present invention, the wheel may include a wheel body having a tire, and a brake plate disposed on the wheel body at a position where the wheel body faces the turning block. The brake plate may have a plurality of groove radially extending around a rotation center of the wheel. At the locked position, the locking member may be engaged with any of the grooves so as to restrict the rotation of the wheel. At the unlocked position, the locking member may be disengaged from the wheel.

The caster according to the present invention may further include an operation member fixed to the fixed block such that the operation member is operatable with respect to the fixed block. The operation member may be connected to the switching member. When the operation member is operated, the switching member may be moved along the caster axis line with respect to the fixed block and the turning block.

A stroller according to the present invention is a stroller including:
a handle,
a front leg and a rear leg;
a caster according to any one of the present invention, mounted to at least one of the front leg and the rear leg.

In the stroller according to the present invention including a pair of rear legs,
any of the aforementioned casters according to the present invention may be disposed as a first caster on one rear leg of the pair of rear legs,
any of the aforementioned casters according to the present invention may be disposed as a second caster on the other rear leg of the pair of rear legs,
a transmission means for moving the second caster in accordance with the movement of the switching member of the first caster may be provided between the first caster and the second caster, and
when the rotation of the wheel of the first caster is restricted, the rotation of the wheel of the second caster may be restricted, and when the restriction on the rotation of the wheel of the first caster is released, the restriction on the rotation of the wheel of the second caster may be released.

According to the present invention, operationality for restricting rotation of a wheel in a stroller caster can be improved.

### BRIEF DESCRIPTION OF THE DRAWINGS

Fig. 1 is a perspective view showing a stroller, for explaining an embodiment of the present invention.
Fig. 2 is a partial perspective view showing a caster of the stroller of Fig. 1.
Fig. 3 is an exploded perspective view of the caster of Fig. 2.
Fig. 4 is a side view of the caster of Fig. 2.
Fig. 5 is a longitudinal sectional view of the caster of Fig. 2, showing a condition where rotation of a wheel is allowed.
Fig. 6 is a longitudinal sectional view of the caster of Fig. 2, showing a condition where rotation of the wheel is restricted.
Fig. 7 is a sectional view taken along a line VII-VII of Fig. 5.
Fig. 8 is a view of a caster shown as similarly to the longitudinal sectional view of Fig. 6, the caster being disposed on a leg opposed to the leg on which the caster of Fig. 2 is disposed.

### MODE FOR CARRYING OUT THE INVENTION

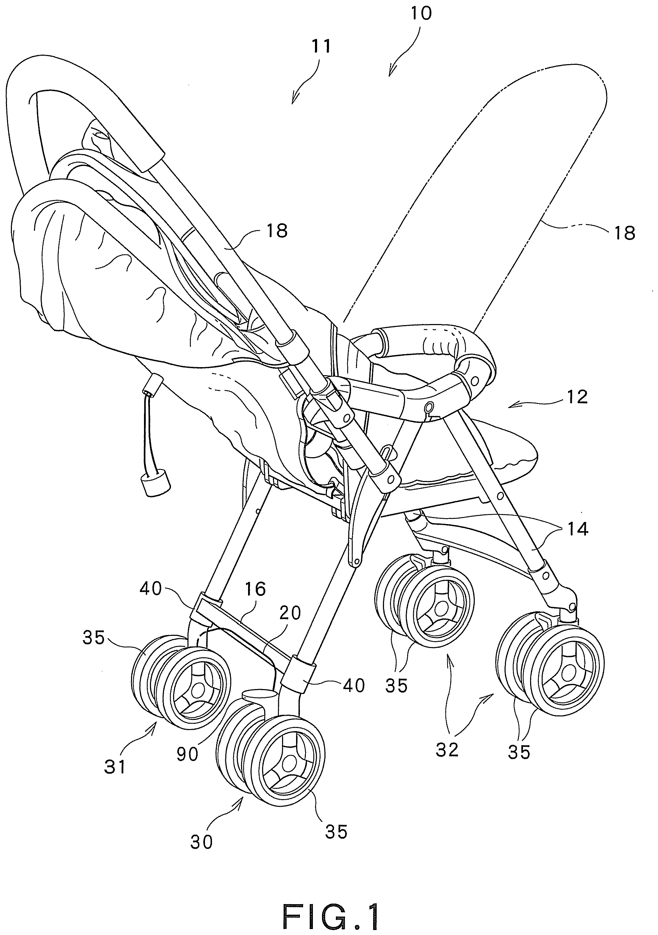

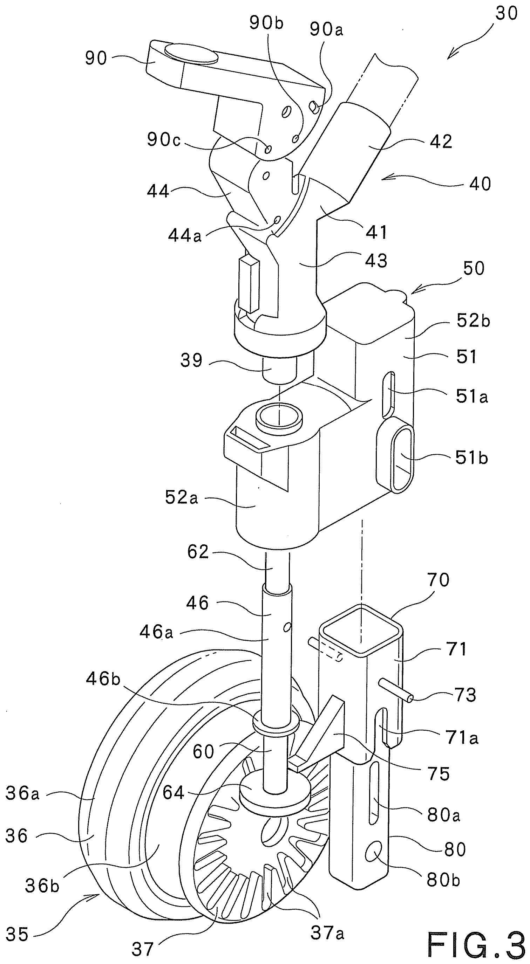

An embodiment of the present invention will be described herebelow with reference to the drawings. Figs. 1 to 8 are views for explaining an embodiment of a stroller and a caster according to the present invention.

Fig. 1 shows an overall structure of a stroller 10. The stroller 10 shown in Fig. 1 includes a stroller body 11, and casters 30, 31 and 32 disposed on the stroller body 11. The stroller body 11 includes a frame part 12 having a pair of front legs 14 and a pair of rear legs 15, and a handle 18 connected to the frame part 20. The casters 30, 31 and 32 are disposed on the respective front legs 14 and the respective rear legs 15. Each of the casters 30, 31 and 32 have a turning block 50 that rotatably holds a wheel 35, and a fixed block 40 that turnably supports the turning block 50 about an axis line (referred to also as "caster axis line Ac") which is not parallel with a rotation axis line Ar of the wheel 35.

In the stroller 10 according to this embodiment, the handle 18 is swingable with respect to the frame part 12. The handle 18 is swingable between a first position (backside pushing position, rearward position), which is shown by solid lines in Fig. 1, and a second position (face-to-face pushing position, forward position), which is shown by two-dot chain lines in Fig. 1. Thus, an operator (caregiver) can steer the stroller 10 while gripping the handle 18 from the backside of a baby so as to drive the stroller 10 such that the baby faces forward in a traveling direction, and an operator can steer the stroller 10 while gripping the handle 18 from a position on a side of the front legs where the operator faces the baby so as to drive the stroller 10 such that the rear legs face the forward side in the traveling direction.

The stroller 10 is preferably equipped with a switching mechanism that can automatically switch, depending on the position of the handle 18, a condition in which the turning block 50 of each of the casters 31, 32 and 33 can be turned with respect to the fixed block 40, and a condition in which the turning block 50 cannot be turned with respect to the fixed block 40. The switching mechanism, depending on the handle 18, allows turning of the turning block 50 with respect to the fixed block 40 about the caster axis line Ac in the caster 30, 31 or 32 disposed on a leg positioned forward in the traveling direction, while restricts turning of the turning block 50 with respect to the fixed block 40 about the caster axis line Ac in the caster 30, 31 or 32 disposed on a leg positioned rearward in the traveling direction.

As a structure for making the handle 18 swingable with respect to the frame part 12, and a structure for automatically restricting the turning of the wheel 35 and the turning block 50 about the caster axis line Ac depending on the position of the handle 18, known structures, such as structures disclosed in JP2008-254688A, for example, can be employed. Thus, more detailed description thereof is omitted in this description.

In addition, in this embodiment, the stroller 10 is configured to be foldable, like a generally prevalent one. As a structure for making the stroller 10 foldable, a known structure, such as a structure disclosed in the above JP2008-254688A, for example, can be employed. Thus, more detailed description thereof is omitted in this specification.

In this specification, the terms "front", "rear", "up" and "down" with respect to the stroller 10 and constituent elements thereof mean, unless otherwise specified, "front", "rear", "up" and "down" with respect to a baby seated in the unfolded stroller 10. Thus, a "back and forth direction" corresponds to a direction connecting a lower left part and an upper right part in a plane of Fig. 1. In addition, unless otherwise specified, the "front" is a side to which the baby in the stroller faces, and is an upper right side in the plane of Fig. 1. On the other hand, an "up and down direction" is a direction perpendicular to the back and forth direction, and is a direction perpendicular to a surface (ground surface) on which the stroller 10 rests. In addition, a "lateral direction" and a "width direction" are directions perpendicular to both the "back and forth direction" and the "up and down direction". Further, the terms "right" and "left" means "right" and "left" in the lateral direction or the width direction with respect to a baby in the stroller 10, respectively. As shown in the drawings, the stroller 10 has substantially a symmetrical structure as a whole, with respect to a lateral center plane extending along the back and forth direction.

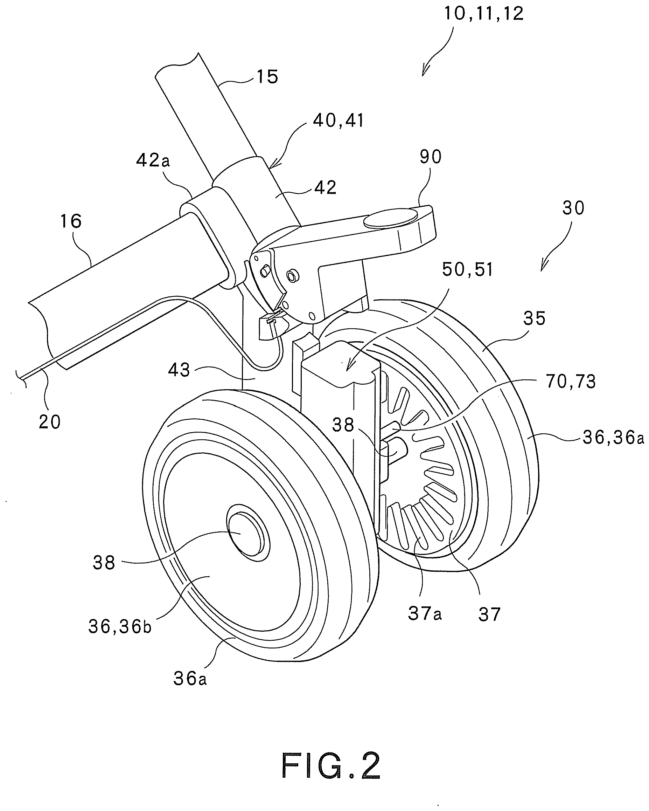

Next, structures of the caster 30 and the stroller 10 related to the caster 30 are explained with reference mainly to Figs. 2 to 8.

As described above, in the illustrated embodiment, all the front legs 14 and the rear legs 15 are provided with the casters. In the illustrated embodiment, the conventional casters 32 are disposed on the pair of front legs 14. On the other hand, the pair of rear legs 15 are quipped with the casters 30 and 31 which are excellent in operationality for restricting the rotation of the wheels 35. Thus, in the below description of the illustrated embodiment, the casters 30 and 31 disposed on the pair of rear legs 15 are explained. In addition, in the illustrated embodiment, the caster 31 disposed on the left rear leg 15 differs from the caster 30 disposed on the right rear leg 15 in a structure related to a method for operating a switching member 60 described below. Other structures of the caster 31 may be the same as those of the caster 30. Thus, in the below description, the caster 30 disposed on the right rear leg 15 is firstly explained, and then the caster 31 disposed on the left rear leg 15 is explained, while focusing differences of the caster 31 from the caster 30 disposed on the right rear leg 15.

As described below, differently from the illustrated embodiment, the casters to be mounted to the respective legs 14 and 15 may have substantially the same structure only excluding structures to be disposed on the legs. In addition, the same or symmetrical casters may be disposed on the pair of front legs 14. Similarly, the same or symmetrical casters may be disposed on the pair of rear legs 15.

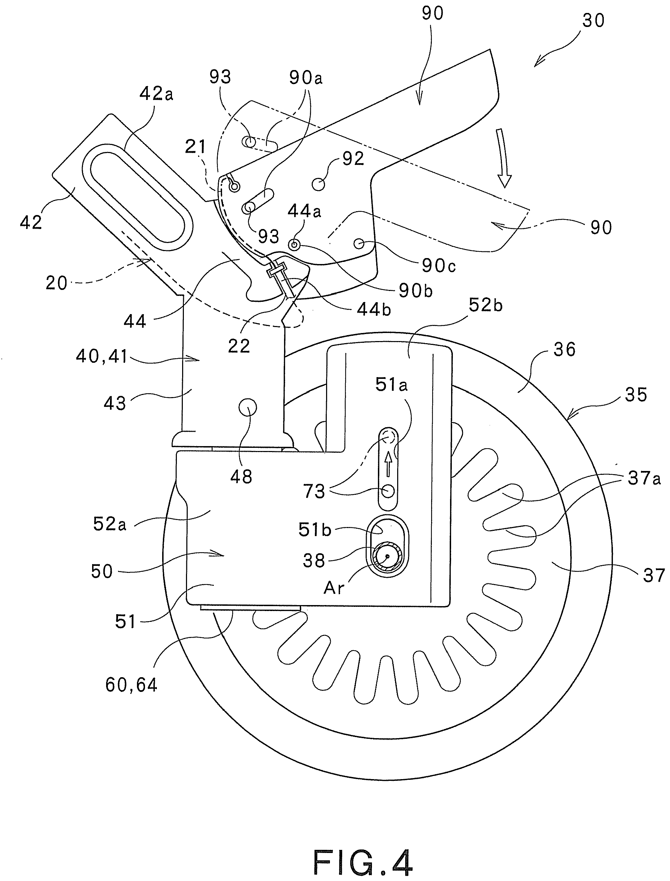

As shown in Figs. 2 to 7, as the overall structure, the caster 30 in this embodiment includes the fixed block 40 fixed on the rear leg 15 of the stroller 10, and the turning block 50 that rotatably holds the wheel 35 about the rotation axis line Ar. The turning block 50 is connected to the fixed block 40 such that the turning block 50 is turnable about the caster axis line Ac with respect to the fixed block 40. The rotation axis line Ar is parallel with the horizontal direction, and the caster axis line Ac is parallel with the up and down direction. As shown in Fig. 1, the caster 30 has a pair of the wheels 35 arranged with the turning block 50 sandwiched therebetween. However, note that, for the sake of convenience in understanding, illustration of one of the wheels, which is located in front of the illustrated field of view, is omitted in Figs. 4, 5 and 6.

The caster 30 further includes a locking member 70, the switching member 60 and an operation member 90. The locking member 70 is held by the turning block 50 such that the locking member 70 is relatively movable with respect to the turning block 50. The switching member 60 is located on the caster axis line Ac, and is relatively movable along the caster axis line Ac with respect to the fixed block 40 and the turning block 50. The operation member 90 is disposed on the fixed block 40 such that the operation member 90 is operable with respect to the fixed block 40. The locking member 70, the switching member 60 and the operation member 90 constitute a braking mechanism for restricting the rotation of the wheel 35 about the rotation axis line Ar.

Furthermore, the caster 30 includes a holding member 80 that holds an axle 38 connected to the wheel 35. The holding member 80 is held by the turning block 50 such that the holding member 80 is operable with respect to the turning block 50. The turning block 50 holds the wheel through the holding member 80. The holding member 80 provides the caster 30 with a suspension function, and guides an operation of the locking member 70 forming the braking mechanism.

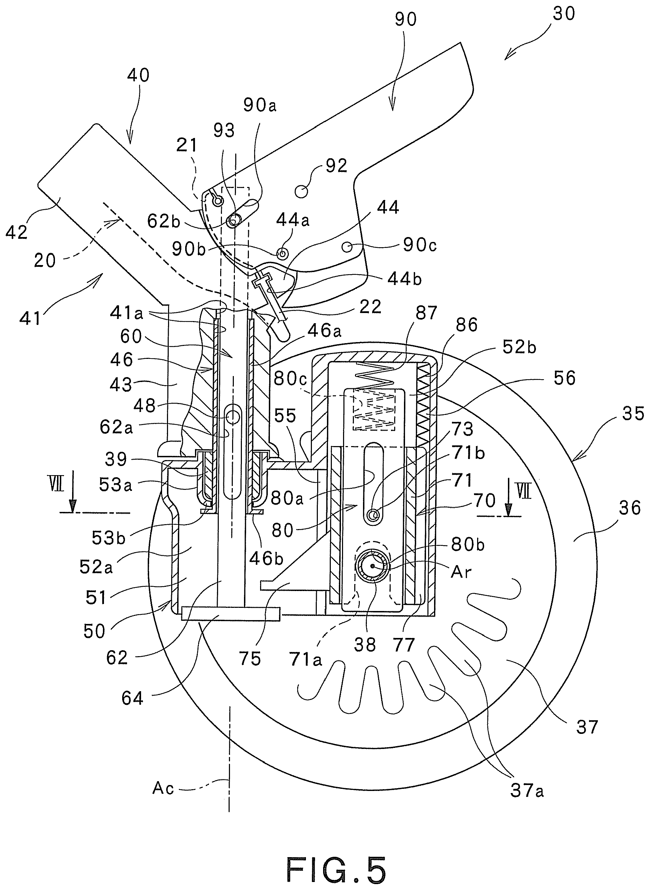

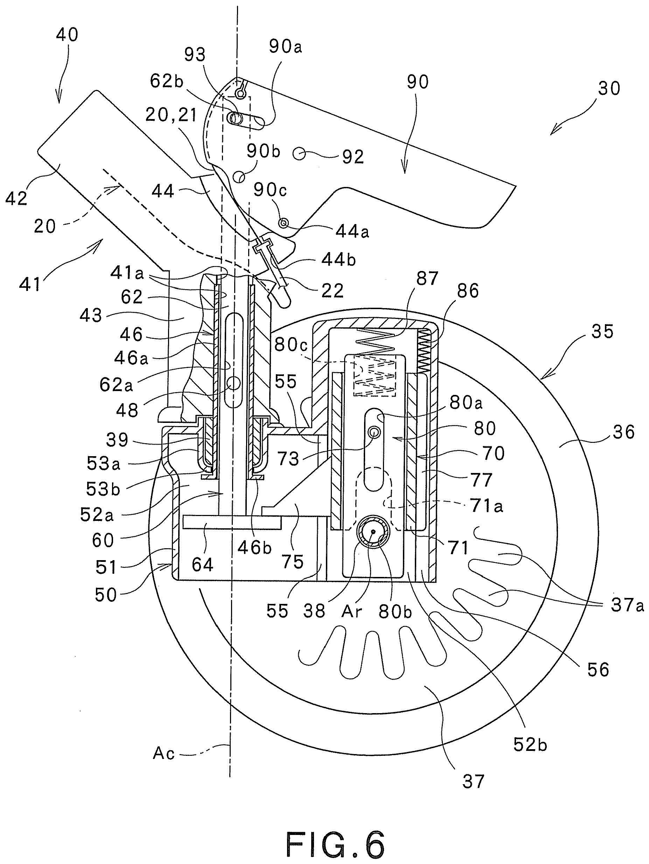

Herebelow, the elements constituting the caster 30 are sequentially explained. The fixed block 40 is firstly explained. As shown in Figs. 5 and 6, the fixed block 40 includes a fixed block body 41 fixed on the rear leg 15, and a shaft member 46 extending downward from the fixed block body 41. The fixed block body 41 has a through-hole (longitudinal hole) 41a extending in the up and down direction. The shaft member 46 is inserted into the through-hole 41a of the fixed block body 41 from below. A fixing pin 48 passes through the shaft member 46 and the fixed block body 41 so as to fix the shaft member 46 onto the fixed block body 41. The shaft member 46 is formed as a metal pipe-like member. The shaft member 46 includes a cylindrical body part 46a having a cylindrical shape through which the fixing pin 48 passes, and a flange part 46b formed on a lower end of the cylindrical body part 46a. The flange part 46b extends from the cylindrical body part 46a, in order to increase a diameter of the the cylindrical body part 46a. The turning block 50 turns around the cylindrical body part 46a of the fixed block 40. Thus, the cylindrical body part 46a and the through-hole 41a into which the cylindrical body part 46a is inserted define the caster axis line Ac in their axis line direction.

The fixed block body 41 includes a fixed part 42 serving as a part to be disposed on the rear leg 15, a shaft support part 43 that supports the shaft member 46, and an operation-member support part 44 on which the operation member 90 is disposed. The fixed block body 41 is formed of, e.g., a resin molded article. As shown in Fig. 1, a rear connection member 16 is arranged between the pair of casters 30 and 31 disposed on the rear legs 15. As shown in Figs. 2 and 4, the fixed part 42 has a boss 42a, and the boss 42a supports the rear connection member 16. In addition, as shown in Figs. 4 to 6, a transmission-means holding part 44b is formed on the operation-member support part 44. The transmission-means holding part 44b is formed as a recess for holding a transmission means 20 which is described below.

Next, there are explained the operation member 90 disposed on the fixed block 40 and the switching member 60 connected to the operation member 90. The operation member 90 and the switching member 60 are both formed as resin molded articles. The operation member 90 is disposed on the operation-member support part 44 of the fixed block 40 through an attachment pin 92. The operation member 90 is formed as a lever which is swingable about an axis line direction of the attachment pin 92 with respect to the fixed block 40. The operation member 90 has a first stop hole 90b and a second stop hole 90c. The first and second stop holes 90b and 90c are engageable with a projecting part 44a formed on the operation-member support part 44. When the first stop hole 90b and the projecting part 44a are engaged with each other, the operation member 90 is held on a predetermined position with respect to the fixed block 40. On the other hand, when the second stop hole 90c and the projecting part 44a are engaged with each other, the operation member 90 is held on another predetermined position with respect to the fixed block 40.

In addition, an elongate engagement hole 90a is formed in the operation member 90. The engagement hole 90a intersects with the caster axis line Ac in a side view, independent of the swinging position of the operation member 90 with respect to the fixed block 40. A connection pin 93 is placed in the engagement hole 90a. The connection pin 93 is movable in the engagement hole 90a in a longitudinal direction of the engagement hole 90a. The connection pin 93 passes through the switching member 60. The connection pin 93 connects the switching member 60 and the operation member 90.

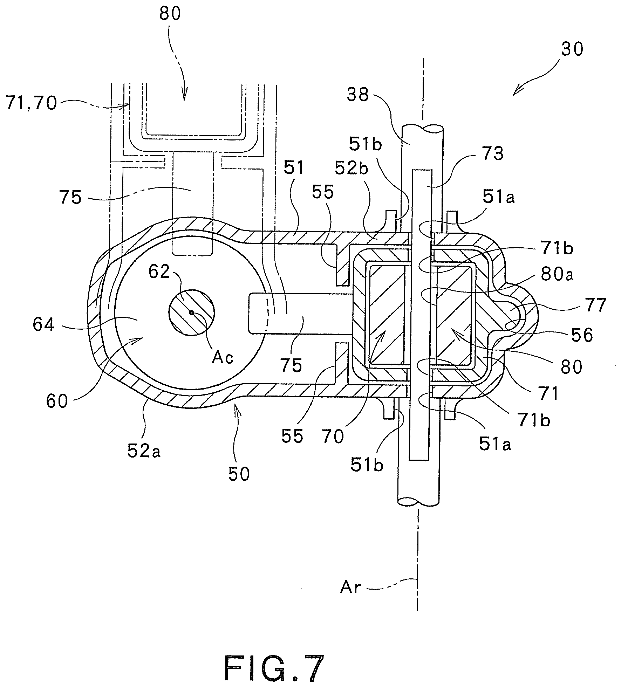

Next, the switching member 60 is explained. As described above, the switching member 60 is located on the caster axis line Ac, and is relatively movable along the caster axis line Ac with respect to the fixed block 40 and the turning block 50. In this embodiment, the switching member 60 is arranged to pass through the through-hole 41a formed in the fixed block 40 and the tubular shaft member 46 placed in the though-hole 41a. In addition, the switching member 60 is slidable with respect to the shaft member 46. The switching member 60 includes a shaft part 62 passing through the shaft member 46, and an engagement planar part 64 fixed on the shaft part 62. the shaft part 62 is formed into a rod-like shape extending in a direction parallel with the caster axis line Ac. On the other hand, the engagement planar part 64 is formed into a planar shape extending in a direction not parallel with the caster axis line Ac. As shown in Fig. 7, the engagement planar part 64 has a discoid shape. The discoid engagement planar part 64 is located such that a center thereof is positioned on the caster axis line Ac, and a planar surface thereof is perpendicular to the caster axis line Ac.

The shaft part 62 of the switching member 60 has a through-hole 62b through which the attachment pin 92 passes. The switching member 60 is connected to the operation member 90 through the attachment pin 92. By operating the operation member 90, more specifically, by swinging the operation member 90 with respect to the fixed block 40, the switching member 60 can be moved upward and downward along the caster axis line Ac. The shaft part 62 of the switching member 60 has a through-hole 62a through which the fixing pin 48 passes. The through-hole 62a is formed as an elongate hole extending in a direction parallel with the caster axis line Ac. Thus, there is no possibility that the relative movement of the switching member 60 along the caster axis line Ac with respect to the shaft member 46 is interfered with by the fixing pin 48.

Next, the turning block 50 is explained. The turning block 50 includes a casing 51 as a resin molded article. The casing 51 roughly includes a connection part 52a and a holding part 52b. The connection part 52a is a part for ensuring connection to the fixed block 40, such that the turning block 50 can be turned about the caster axis line Ac with respect to the fixed block 40. On the other hand, the holding part 52b is a part for accommodating the holding member 80 holding the wheel 35 and the locking member 70 for restricting the rotation of the wheel 35.

As shown in Figs. 5 and 6, the casing 51 has a tubular holding part 53a in the connection part 52a. The shaft member 46 of the fixed block 40 passes through the tubular holding part 53a. At a lower end of the tubular holding part 53a, an annular bottom-plate part 53b extends from the tubular holding part 53a, in order to reduce a diameter of the tubular holding part 53a. Namely, the tubular holding part 53a and the annular bottom-plate part 53b form a recessed part having a center opening in a bottom surface thereof. The shaft member 46 of the fixed block 40 passes through the recessed part. The flange part 46b of the shaft member 46 is positioned to face the annular bottom-plate part 53b from a lower side in the up and down direction. Thus, the turning block 50 is supported by the fixed block 40 such that the turning block 50 does not fall downward. As described above, the shaft part 62 of the switching member 60 extends downward through the shaft member 46. The shaft part 62 of the switching member 60 extends into the casing 51 of the turning block 50, without being in contact with the tubular holding part 53a and the annular bottom-plate part 53b. As shown in Fig. 7, the engagement planar part 64 disposed on the lower end of the shaft part 62 is placed inside the turning block 50. An inside space defined by the casing 51 of the turning block 50 in the connecting part 52a is of a shape corresponding to an outer profile of the engagement planar part 64. Thus, the engagement planar part 64 can be moved inside the turning block 50 along the caster axis line Ac, without being in contact with the turning block 50.

At a position of the turning block 50 facing the tubular holding part 53a and the annular bottom-plate part 53b, there is provided a substantially cylindrical bush 39 through which the shaft member 46 passes. Due to the interposition of the bush 39, it can be avoided that the shaft member 46 is directly in contact with the tubular holding part 53a and the annular bottom-plate part 53b, whereby smooth relative rotation between the fixed block 40 and the turning block 50 can be achieved.

As shown in Figs. 5 to 7, a guide wall 55 extending in the up and down direction is formed in the casing 51 of the turning block 50. The casing 51 and the guide wall 55 form a space, in the holding part 52b, for accommodating the locking member 70 and the holding member 80. This space extends in the up and down direction, and has a lower opening. In this embodiment, the turning block 50 supports the locking member 70 such that the locking member 70 is movable in a direction parallel with the caster axis line Ac, i.e., in the up and down direction.

Next, the locking member 70 is explained. As described above, the locking member 70 in this embodiment is movable within the casing 51 of the turning block 50, in a direction parallel with the caster axis line Ac. In addition, at least a part of the locking member 70 is located on a position facing the engagement planar part 64 of the switching member 60 along a direction parallel with the caster axis line Ac. Thus, in accordance with the movement of the switching member 60 along the caster axis line Ac, the locking member 70 is pressed by the engagement planar part 64 of the switching member 60 so as to be moved. The locking member 70 is movable between a locked position at which the locking member 70 is engaged with the wheel 35 so as to restrict the rotation of the wheel 35 (position shown in Fig. 6), and a disengaged position at which the locking member 70 is disengaged from the wheel 35 (position shown in Fig. 5).

In this embodiment, the locking member 70 includes a locking body part 71, a locking pin 73 held by the locking body part 71, and a projecting piece 75 projecting from the locking body part 71. The locking body part 71 is movably supported in the casing 51 of the turning block 50. The locking body part 71 has a quadrilateral tubular shape having both ends that are opened in the moving direction thereof. As shown in Fig. 7, an accommodation space corresponding to the outer profile of the locking body part 71 is formed in the turning block 50. Specifically, the casing 51 has therein a space capable of accommodating a quadratic prism. The locking body part 71 has a projection 77 extending in a direction parallel with the caster axis line Ac that is the moving direction thereof. A guide recess 56 corresponding to the projection 77 is formed in an inner surface of the turning block 50 in a direction parallel with the caster axis line Ac. Owing to the engagement between the projection 77 and the guide recess 56, smooth relative movement of the locking member 70 in only one direction with respect to the turning block 50 can be achieved.

A through-hole 71b through which the locking pin 73 passes is formed in the locking body part 71. In addition, a through-hole 51a through which the locking pin 73 passes is formed in the casing 51 of the turning block 50. The through-hole 51a formed in the casing 51 is an elongate hole extending in the relative moving direction of the locking body part 71 with respect to the casing 51. Thus, the through-hole 51 extends in a direction parallel with the caster axis line Ac. As described below, when the locking member 70 is located at the locked position, the locking pin 73 is engaged with the wheel 35 so as to restrict the rotation of the wheel 35. Meanwhile, when the locking member 70 is located at the disengaged position, the locking pin 73 is disengaged from the wheel 35.

As shown in Figs. 5 and 6, a first urging member 86 formed of, e.g., a compression spring, is provided between the locking member 70 and the turning block 50. The first urging member 86 urges the locking member 70 along a direction in which the locking member 70 is movable. In this embodiment, the first urging member 86 urges downward the locking member 70 from above in a direction parallel with the caster axis line Ac. On the other hand, the projecting piece 75 projects from the locking body part 71 to a position facing the engagement planar part 64 of the switching member 60 from above along a direction parallel with the caster axis line 71. Thus, when the locking member 70 is pressed by the switching member 60 that moves upward along the caster axis line Ac, the locking member 70 can be moved upward against the urging force of the first urging member 86.

Next, the holding member 80 is explained. The holding member 80 is a member for holding the axle 38 on which the wheel 35 is disposed. In the illustrated example, the holding member 80 has an outer profile of a parallelepiped shape. The holding member 80 is placed in the casing 51 such that a longitudinal direction of the holding member 80 is along the up and down direction. At least a part of the holding member 80 is located in the locking body part 71 of the locking member 70 having a tubular shape. The holding member 80 also serves as a member for guiding the movement of the locking member 70 with respect to the turning block 50. The holding member 80 has a through-hole 80a through which the locking pin 73 of the locking member 70 passes. The through-hole 80a is an elongate hole extending in the moving direction of the locking member 70 with respect to the turning block 50.

The holding member 80 has a through-hole 80b as a bearing hole through which the axle 38 passes. The casing 51 of the turning block 50 also has a through-hole 51b as a bearing hole through which the axle 38 passes. However, as shown in Fig. 4, the through-hole 51b formed in the casing 51 extends slightly longer in the up and down direction parallel with the caster axis line Ac. Thus, the holding member 80 holding the axle 38 is movable with respect to the turning block 50 within a range limited in the up and down direction. In addition, a second urging member 87 formed of, e.g., a compression spring, is provided between the holding member 80 and the turning block 50. The second urging member 87 urges the holding member 80 in the up and down direction. In this embodiment, the second urging member 87 urges downward the holding member 80 from above in a direction parallel with the caster axis line Ac. Thus, the holding member 80 holding the axle 38 provides the caster 30 with a suspension function by the urging force from the second urging member 87. In the illustrated example, a receiving recess 80c is formed in a upper end of the holding member 80, and one end of the second urging member 87 is accommodated in the receiving recess 80c.

In the illustrated embodiment, a cutout 71a is formed in the locking body part 71 of the locking member 70. In accordance with the movement of the locking body part 71 and the movement of the holding member 80, the axle 38 held by the holding member 80 can move into the cutout 71a. The cutout 71a is formed to extend upward from a lower end of a side surface of the quadrilateral cylinder defined by the locking body part 71. When the locking member 70 is moved downward with respect to the turning block 50, the axle 38 held by the locking member 70 moves into the cutout 71a of the locking body part 71. Namely, due to the cutout 71a, interference of the movement of the locking member 70 with respect to the turning block 50 can be avoided.

Next, the wheel 35 is explained. In this embodiment, the wheel 35 includes a wheel body 36 having a tire 36a, and a brake plate 37 fixed on the wheel body 36. As shown in Fig. 1, the wheel body 36 includes the tire 36a, and a wheel member 36b holding the tire 36a. The brake plate 37 is fixed to the wheel member 36b of the wheel body 36. The brake plate 37 is located at a position, of the wheel body 36, facing the turning block 50. The brake plate 37 has a plurality of grooves 37a radially extending around the rotation axis line Ar of the wheel 35. As shown in Figs. 2 to 6, each groove 37a is opened inside in the radial direction.

An operation of the caster 30 as structured above is explained.

There is firstly explained a case in which the operation member 90 is under the condition shown in Fig. 5. Under the condition shown in Fig. 5, the projecting part 44a of the fixed block 40 is received in the first stop hole 90b of the operation member 90. Due to the engagement between the first stop hole 90b and the projecting part 44a, the operation member 90 is held at the position shown in Fig. 5 as well as shown by the solid line in Fig. 4. Under the condition of Fig. 5, the switching member 60 is moved to a lower position along the caster axis line Ac. The engagement planar part 64 of the switching member 60 is located below the projecting piece 75 of the locking member 70. Thus, the locking member 70 is moved to a lower position by the urging force from the first urging member 86.

As shown in Fig. 5, under the condition where the locking member 70 is moved to a lower position in the up and down direction, the locking pin 73 of the locking member 70 is not positioned in the groove 37a of the brake plate 37. Namely, the position of the locking member 70 shown in Fig. 5 is an unlocked position where the locking pin 73 and the groove 37a are disengaged from each other so that the wheel 35 can be rotated.

On the other hand, in order to restrict the rotation of the wheel 35, the operation member 90 is moved from the position shown by the solid lines in Fig. 4 to the position shown by the two-dot chain lines in Fig 4. In accordance with the movement of the operation member 90, the switching member 60 is moved upward along the caster axis line Ac. At this time, the engagement planar part 64 of the switching member 60 comes into contact with the projecting piece 75 of the locking member 70, and then pushes the projecting piece 75 upward along the caster axis line Ac against the urging force of the first urging member 86. Thus, as shown in Fig. 6, the locking member 70 is moved upward. As shown in Figs. 5 and 6, the locking pin 73 of the locking member 70 is located above the axle 38 along a direction parallel with the caster axis line Ac. Thus, when the locking member 70 is moved upward along the caster axis line Ac, the locking pin 73 can move from the internal side into one of the plurality of grooves 37a that extend radially around the rotation axis line Ar of the wheel 35. Namely, the position of the locking member 70 shown in Fig. 6 is the locked position where the locking pin 73 is engaged with one of the grooves 37a so that the rotation of the wheel 35 is restricted.

As shown Fig. 7, the switching member 60 is located on the caster axis line Ac. At least part of the locking member 70 is located at a position where the part faces the engagement planer part 64 of the switching member 60 along a direction parallel with the caster axis line Ac. Particularly in this embodiment, the projecting piece 75 of the locking member 70 is located at a position where the projecting piece 75 faces the discoid engagement planar part 64 of the switching member 60, along a direction parallel with the caster axis line Ac. Namely, as shown by the two-dot chain lines in Fig. 7, even when the turning block 50 holding the locking member 70 is turned with respect to the fixed block 40 holding the switching member 60, the projecting piece 75 and the engagement planar part 64 face with each other, independently of the turning position of the turning block 50. As a result, independently of the relative positional relationship of the turning block 50 with respect to the fixed block 40, by moving the switching member 60 along the caster axis line Ac, the locking member 70 engageable with the wheel 35 can be moved with respect to the turning block 50. Thus, the condition where the rotation of the wheel 35 is allowed, and the condition where the rotation of the wheel 35 is restricted, can be switched easily and stably.

In the condition shown in Fig. 6, the projecting part 44a of the fixed block 40 is received in the second stop hole 90c of the operation member 90. Owing to the engagement between the second stop hole 90c and the projecting part 44a, the operation member 90 is held on the position shown in Fig. 6, whereby the rotation of the wheel 35 is kept restricted.

When the operation member 90 is operated from the position shown in Fig. 6 to the position shown in Fig. 5, the switching member 60 is moved downward along the caster axis line Ac. In accordance with the movement, the locking member 70 is urged by the first urging member 86 so as to be moved downward. Thus, the locking pin 73 and the groove 37a are disengaged from each other, so that the rotation of the wheel 35 is allowed.

Next, the caster 31 disposed on the left rear leg 15 is explained. The caster 31 differs from the caster 30 disposed on the right rear leg 15 in the manner of operating the switching member 60. As shown in Fig. 1, the caster 31 disposed on the left rear leg 15 is connected to the caster 30 disposed on the right rear leg 15 through the transmission means 20. In accordance with the movement of the caster 30 disposed on the right rear leg 15, the transmission means 20 causes the switching member 61 of the caster 31 disposed on the left rear leg 15 to be moved. Thus, the caster 31 disposed on the left rear leg 15 differs from the caster 30 disposed on the right rear leg 15 in that the caster 31 does not have an independent operation member. However, the caster 31 has the same structure as that of the caster 30 disposed on the right rear leg 15 in the other points.

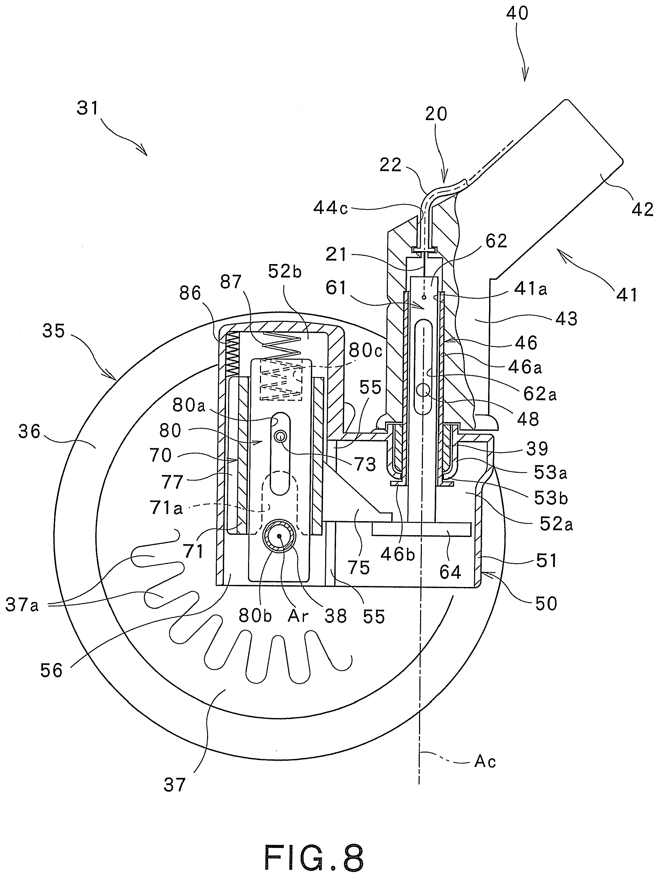

In this embodiment, the transmission means 20 includes a tube 22 and a wire 21 inserted in the tube 22. The wire 21 is slidable with respect to the tube 22. One end of the tube 22 is held on the transmission-means holding part 44b formed in the fixed block 40 of the aforementioned caster 30. On the other hand, one end of the wire 21 is fixed on the operation member 90, as shown in Figs. 5 and 6. As shown in Fig. 8, the other end of the tube 22 is held on the transmission-means holding part 44c formed in the fixed block 40 of the caster 31 disposed on the left rear leg 15. On the other hand, as shown in Fig. 8, the other end of the wire 21 is held on the switching member 61 of the caster 31 disposed on the left rear leg 15.

When the operation member 90 is operated from the position shown in Fig. 5 to the position shown in Fig. 6, the wire 21 is moved in the tube 22 toward the caster 30 disposed on the right rear leg 15. As a result, the switching member 61 of the caster 31 disposed on the left rear leg 15 is moved upward along the caster axis line Ac. Namely, similarly to the caster 30 disposed on the right rear leg 15, the rotation of the wheel 35 of the caster 31 disposed on the left rear leg 15 is restricted. Meanwhile, when the operation member 90 is operated from the position shown in Fig. 6 to the position shown in Fig. 5, the wire 21 is moved in the tube 22 toward the caster 31 disposed on the left rear leg 115. As a result, the switching member 61 of the caster 31 disposed on the left rear leg 15 is moved downward along the caster axis line Ac. Namely, similarly to the caster 30 disposed on the right rear leg 15, the rotation of the wheel 35 of the caster 31 disposed on the left rear leg 15 is allowed. In this manner, in the illustrated embodiment, by operating the one operation member 90 which is disposed not on the turning block 50 but on the fixed block 40, the two casters 30 and 31 disposed respectively on the pair of rear legs 15 can be switched from the condition where the rotation of the wheel 35 is allowed, to the condition where the rotation of the wheel 35 is restricted, and vice versa.

According to the above embodiment, the caster 30 is equipped with the switching member 60 that is located on the caster axis line Ac and is relatively movable with respect to the fixed block 40 and the turning block 50 along the caster axis line Ac. In accordance with the movement of the switching member 60 along the caster axis line Ac, the locking member 70 supported by the turning block 50 is moved between the locked position where the locking member 70 is engaged with the wheel 35 so as to restrict the rotation of the wheel 35, and the unlocked position where the locking member 70 is disengaged from the wheel 35. According to such an embodiment, by moving the switching member 60 with respect to the fixed block 40 fixed to the leg 15 along the caster axis line Ac, the switching member 60 is moved with respect also to the turning block 50 so as to further move the locking member 70 supported by the turning block 50 between the locked position and the unlocked position. That is to say, independently of the position of the turning block 50 with respect to the fixed block 40, by moving the switching member 60 along the caster axis line Ac, the locking member 70 engageable with the wheel 35 can be moved with respect to the turning block 50. Thus, the condition where the rotation of the wheel 35 is allowed, and the condition where the rotation of the wheel 35 is restricted, can be switched easily and stably.

In addition, according to this embodiment, the fixed block 40 includes the fixed block body 41 fixed to the leg of the stroller 10 and the shaft member 46 extending downward from the fixed block body 41, while the turning block 50 includes the tubular holding part 53a through which the shaft member 46 of the fixed block 40 passes. The switching member 60 is arranged to pass through the shaft member 46 such that the switching member 60 is slidable with respect to the shaft member 46. According to such an embodiment, the turning block 50 can be smoothly turned about the caster axis line Ac with respect to the fixed block 40, and the length of the switching member 60 along the caster axis line Ac can be ensured, whereby the switching member 60 can be smoothly moved with respect to the fixed block 40 and the turning block 50 along the caster axis line Ac. In addition, the switching member 60 can pass through the tubular holding part 53a by passing through the shaft member 46 and extend into the turning block 50 so as to be engaged with the locking member 70. Thus, the condition where the rotation of the wheel 35 is allowed, and the condition where the rotation of the wheel 35 is restricted, can be switched more reliably, without interfering with the turning of the turning block 50 with respect to the fixed block 40.

Further, according to this embodiment, the shaft member 46 is fixed to the fixed block body 41 through the fixing pin 48 passing through the shaft member 46. Meanwhile, the switching member 60 has the shaft part 62 passing through the shaft member 46. The through-hole 62a extending in a direction parallel with the caster axis line Ac is formed in the shaft part 62, and the fixing pin 48 passes through the through-hole 62a. According to such an embodiment, due to the engagement between the fixing pin 48 of the fixed block 40 and the through-hole 62a of the switching member 60, the switching member 60 can be more smoothly moved with respect to the fixed block 40 and the turning block 50 along the caster axis line Ac. Thus, the condition where the rotation of the wheel 35 is allowed, and the condition where the rotation of the wheel 35 is restricted, can be switched more reliably.

Further, according to this embodiment, the shaft member 46 includes the cylindrical body part 46a having a cylindrical shape through which the fixing pin 48 passes, and the flange part 46b formed on a lower end of the cylindrical body part 46a. The flange part 46b extends from the cylindrical body part 46a, in order to increase a diameter of the cylindrical body part 36a. The flange part 46b is located to face the lower end of the tubular holding part 53 of the turning block 50 in a direction parallel with the caster axis line Ac. According to such an embodiment, the switching member 60 can pass through the shaft member 46 of the fixed block 40 to reach the inside of the turning block 50 without being in contact with at least the tubular holding part 53a of the turning block 50. Thus, it can be prevented that the rotation of the turning block 50 with respect to the fixed block 40 is interfered with by the friction of the switching member 60. That is to say, the condition where the rotation of the wheel 35 is allowed, and the condition where the rotation of the wheel 35 is restricted, can be switched easily, without interfering with the essential function of the caster 30.

Further, according to this embodiment, at a lower end of the tubular holding part 53a, there is formed the annular bottom-plate part 53b which extends from the tubular holding part 53a, in order to reduce a diameter of the tubular holding part 53a. At a position facing the tubular holding part 53a and the annular bottom-plate part 53b of the turning block 50, there is provided the bush 39 through which the shaft member 46 of the fixed block 40 passes. According to such an embodiment, due to the engagement between the flange part 46b of the shaft member 46 of the fixed block 40 and the annular bottom-plate part 53b of the turning block 50, the fixed block 40 and the turning block 50 can be stably connected to each other. Moreover, since the bush 39 is interposed between the fixed block 40 and the turning block 50, the turning of the turning block 50 with respect to the fixed block 40 can be stably achieved.

Further, according to this embodiment, the switching member 60 includes the shaft part 62 extending along the caster axis line Ac, and the engagement planar part 64 fixed to the shaft part 62 and extends in a direction not parallel with the caster axis line Ac. In accordance with the movement of the switching member 60, the locking member 70 is pressed by the engagement planar part 64 of the switching member 60 so as to be moved from one of the locked position and the unlocked position to the other position. Namely, according to this embodiment, the switching member 60 has the engagement planar part 64 of a wide width. In accordance with the movement of the switching member 60 along the caster axis line Ac, the engagement planar part 64 of a wide width of the switching member 60 comes into contact with the locking member 70 and presses the locking member. Thus, the engagement between the switching member 60 and the locking member 70 can be more stably ensured, whereby the locking member 70 can be more reliably operated with the use of the switching member 60. As a result, the condition where the rotation of the wheel 35 is allowed, and the condition where the rotation of the wheel 35 is restricted, can be switched more reliably.

Further, according to this embodiment, the engagement planar part 64 has a discoid shape. In particular, the discoid engagement planar part 64 is located such that the center thereof is located on the caster axis line Ac and the planar surface thereof is perpendicular to the caster axis line Ac. According to such an embodiment, independently of the position of the turning block 50 with respect to the fixed block 40, the engagement planar part 64 of the switching member 60 and the locking member 70 supported by the turning block 50 can be stably engaged with each other. Thus, the condition where the rotation of the wheel 35 is allowed, and the condition where the rotation of the wheel 35 is restricted, can be switched more reliably.

Further, according to this embodiment, the locking member 70 has the projecting piece 75 projecting to a position facing the engagement planar part 64 along a direction parallel with the caster axis line Ac. According to such an embodiment, the switching member 60 and the locking member 70 can be more reliably engaged with each other, without enlarging the turning block 50 and the caster 30. Thus, the locking member 70 can be more reliably operated with the use of the switching member 60. Thus, the condition where the rotation of the wheel 35 is allowed, and the condition where the rotation of the wheel 35 is restricted, can be switched more reliably.

Further, according to this embodiment, the locking member 70 is movable with respect to the tuning member 50 in a direction parallel with the caster axis line Ac. According to such an embodiment, the moving direction of the switching member 60 with respect to the turning block 50 and the moving direction of the locking member 70 with respect to the turning block 50 are parallel with each other. Thus, in accordance with the movement of the switching member 60, the locking member 70 can be more stably moved. As a result, the condition where the rotation of the wheel 35 is allowed, and the condition where the rotation of the wheel 35 is restricted, can be switched more reliably.

Further, according to this embodiment, the locking member 70 includes the locking body part 71 that is relatively movable with respect to the turning block 50 and the locking pin 73 held by the locking body part 71, while the turning block 50 includes the casing 51 accommodating the locking body part 71 such that the locking body part 71 is movable therein. The casing 51 has the through-hole 51a extending in the relative moving direction of the locking body part 71 with respect to the turning block 50. The locking pin 73 passes through the through-hole 51a. When the locking member 70 is located at the locked position, the locking pin 73 is engaged with the wheel 35 so as to restrict the wheel 35. When the locking member 70 is located at the unlocked position, the locking pin 736 is disengaged from the wheel 35. According to such an embodiment, due to the engagement between the locking pin 73 of the locking member 70 and the through-hole 51a formed in the casing 51, the locking member 70 can be more smoothly moved with respect to the turning block 50. Thus, the condition where the rotation of the wheel 35 is allowed, and the condition where the rotation of the wheel 35 is restricted, can be switched more reliably.

Further, according to this embodiment, the locking body part 71 is supported movably with respect to the casing 51, and has the tubular shape having both ends that are opened in the moving direction of the locking body part 71. The holding member 80 is located such that at least a part of the holding member 80 is positioned inside the locking body part 71. According to such an embodiment, due to the engagement between the locking body part 71 having a tubular shape and the holding member 80, the locking member 70 can be more smoothly moved with respect to the turning block 50. Thus, the condition where the rotation of the wheel 35 is allowed, and the condition where the rotation of the wheel 35 is restricted, can be switched more reliably.

Further, according to this embodiment, the holding member 80 has the through-hole 80a extending in the moving direction of the locking body part 71, through which the locking pin 73 passes. According to such an embodiment, due to the engagement between the locking pin 73 of the locking member 70 and the through-hole 80a formed in the holding member 80, the locking member 70 can be more smoothly moved with respect to the turning block 50. Thus, the condition where the rotation of the wheel 35 is allowed, and the condition where the rotation of the wheel 35 is restricted, can be switched more reliably.

Further, according to this embodiment, the locking body part 71 has the cutout 71a into which the axle 38 moves in accordance with the movement of the locking body part 71. According to such an embodiment, due to the engagement between the cutout 71a formed in the locking body part 71 of the locking member 70 and the axle 38, the locking member 70 can be more smoothly guided and moved with respect to the turning block 50. Thus, the condition where the rotation of the wheel 35 is allowed, and the condition where the rotation of the wheel 35 is restricted, can be switched more reliably.

The present invention has been described hereabove based on the illustrated embodiment. However, the present invention is not limited to this embodiment, and can be carried out in various other embodiments. Herebelow, modification examples are explained.

For example, in the aforementioned embodiment, the caster 30 disposed on the right rear leg 15 and the caster 31 disposed on the left rear leg 15 have been explained. However, these casters 30 and 31 may be disposed on the pair of front legs 14 instead of the pair of rear legs 15, or may be disposed on the pair of front legs 14 in addition to the pair of rear legs 15.

In addition, in the aforementioned embodiment, although there has been explained the example in which the caster 31 disposed on the left rear leg 15 is operated through the transmission means 20 similarly to the caster 30 disposed on the right rear leg 15, the present invention is not limited thereto. The caster 31 disposed on the left rear leg 15 may be equipped with an operation member for independently operating the switching member 60.

Further, in the aforementioned embodiment, although there has been explained the example in which the operation member 90 for operating the switching member 60 of the caster 30 is disposed on the fixed block 40 of the caster 30, the present invention is not limited thereto. For example, a remote operation member, instead of the operation member 90, may be provided on any position of the stroller body 11, such that the operation of the remote operation member can be transmitted to the switching members 60 and 61 of the casters 30 and 31 through an auxiliary transmission means. Namely, according to this example, by operating the remote operation member, the switching members 60 and 61 of the casters 30 and 31 can be moved through the auxiliary transmission means.

Some modification examples have been explained hereabove, and it is possible as a matter of course that these modification examples may be suitably combined to each other.

## Claims

1. A caster (30, 31) comprising:
a fixed block (40) fixed to a leg (15) of a stroller (10); a turning block (50) connected to the fixed block (40) such that the turning block (50) is turnable about a caster axis line (71) with respect to the fixed block (40); a wheel (35) supported by the turning block (50) through an axle (38) such that the wheel (35) is rotatable with respect to the turning block (50); a locking member (70) supported by the turning block (50) such that the locking member (70) is relatively movable with respect to the turning block (50); and a switching member (60 , 61) located on the caster axis line (71) , and relatively movable along the caster axis line (71) with respect to the fixed block (40) and the turning block (50); wherein the locking member (70) is movable in accordance with the movement of the switching member (60 , 61) along the caster axis line (71) , between a locked position where the locking member (70) is engaged with the wheel (35) so as to restrict a rotation of the wheel (35) , and an unlocked position where the locking member (70) is disengaged from the wheel (35) , **characterized in that** the switching member (60 , 61) includes a shaft part extending along the caster axis line (71), and an engagement planar part fixed to the shaft part and extending in a direction not parallel with the caster axis line (71), and in accordance with the movement of the switching member (60, 61) along the caster axis line (71), the locking member (70) is pressed by the engagement planar part of the switching member (60, 61) so as to be relatively moved with respect to the turning block (50) .

2. The caster (30 , 31) according to claim 1, wherein : the fixed block (40) includes a fixed block body (41) fixed to the leg (15) of the stroller (10) , and a shaft member (46) extending downward from the fixed block body (41); the turning block (50) includes a tubular holding part through which the shaft member (46) of the fixed block (40) passes; and the switching member (60, 61) is located to pass through the shaft member (46) such that the switching member (60, 61) is slidable with respect to the shaft member (46).

3. The caster (30, 31) according to claim 2, wherein : the shaft member (46) is fixed to the fixed block body (41) through a fixing pin (48) passing through the shaft member (46); the switching member (60, 61) includes a shaft part passing through the shaft member (46); and the shaft part has a through hole (41A, 51A, 51B, 51, 62A, 62B, 71B, 80A, 80B) formed as an elongate hole (41 A, 51 A, 51 B, 51, 62A, 62B, 71 B, 80A, 80B) extending in a direction parallel with the caster axis line (71) , with the fixing pin (48) passing through the through hole (41 A, 51 A, 51 B, 51, 62A, 62B, 71B, 80A, 80B).

4. The caster (30 , 31) according to claim 2 or 3,
wherein: the shaft member (46) includes a cylindrical body part having a cylindrical shape, and a flange part disposed on a lower end of the cylindrical body part, the flange part extending from the cylindrical body part in order to increase a diameter; and the flange part is located to face a lower end of the tubular holding part of the turning block (50), along a direction parallel with the caster axis line (71).

5. The caster (30, 31) according to any one of claims 2 to 4, wherein: an annular bottom plate part is formed on a lower end of the tubular holding part of the turning block (50), the annular bottom plate part extending from the tubular holding part in order to reduce a diameter; and a bush (39) through which the shaft member (46) passing, the bush (39) being disposed at a position facing the tubular holding part of the turning block (50) and the annular bottom plate of the turning block (50).

6. The caster (30,31) according to any one of claims 1-5, wherein the engagement planar part has a discoid shape.

7. The caster (30,31) according to claim 5 or 6, wherein the locking member (70) includes a projecting piece (75) projecting to a position facing the engagement planar part along a direction parallel with the caster axis line (71).

8. The caster according to any one of claims 1 to 7, wherein the locking member (70) is movable with respect to the turning block (50) in a direction parallel with the caster axis line (71).

9. The caster (30, 31) according to any one of claims 1 to 8, wherein:
the locking member (70) includes a locking body part relatively movable with respect to the turning block (50), and a locking pin (736, 73) held on the locking body part;
the turning block (50) includes a casing (51) accommodating the locking body part such that the locking body part is movable therein;
the casing (51) has a through-hole (41 A, 51 A, 51 B, 51, 62A, 62B, 71 B, 80A, 80B) through which the locking pin (736, 73) passes, the through-hole (41 A, 51 A, 51 B, 51, 62A, 62B, 71 B, 80A, 80B) extending in a relative moving direction of the locking body part with respect to the turning block (50);
and when the locking member (70) is located at the locked position, the locking pin (736, 73) is engaged with the wheel (35) so as to restrict the rotation of the wheel (35), and when the locking member (70) is located at the unlocked position, the locking pin (736, 73) is disengaged from the wheel (35).

10. The caster (30, 31) according to claim 9, wherein:
the locking body part is supported movably with respect to the casing (51), and has a tubular shape having both ends that are opened in the moving direction of the locking body part;
a holding member (80) is disposed such that at least a part of the holding member (80) is positioned inside the locking body part;
and the axle (38) passes through the casing (51) and the holding member (80).

11. The caster (30, 31) according to claim 10, wherein : the casing (51) has a through hole (41A, 51 A, 51B, 51, 62A, 62B, 71B, 80A, 80B) through which the axle (38) passes, the through hole (41A, 51A, 51B, 51, 62A, 62B, 71B, 80A, 80B) extending in the relative moving direction of the locking body part with respect to the casing (51); and the holding member (80) is movable, together with the axle (38) held by the holding member (80) with respect to the casing (51) in a direction parallel with the relative moving direction of the locking body part with respect to the casing (51).

12. The caster (30, 31) according to claim 10 or 11, wherein the holding member (80) has a through hole (41 A, 51 A, 51 B, 51, 62A, 62B, 71 B, 80A, 80B) extending in the moving direction of the locking body part, with the locking pin (736, 73) passing through the through hole (41A, 51A, 51B, 51, 62A, 62B, 71 B, 80A, 80B).

13. The caster (30, 31) according to any one of claims 10 to 12, wherein the locking body part has a cutout (71 A) into which the axle (38) moves in accordance with the movement of the locking body part.

14. A stroller (10) comprising : a handle (18), a front leg (14) and a rear leg ( 15); a caster (30, 31) according to any one of claims 1 to 13, mounted to at least one of the front leg (15) and the rear leg (15).

## Patentansprüche

1. Rolle (30, 31) mit folgenden Merkmalen:
ein fester Block (40), der an einem Bein (15) eines Kinderwagens (10) angebracht ist; ein Drehblock (50), der mit dem festen Block (40) derart verbunden ist, dass der Drehblock (50) um eine Rollenachsenlinie (71) in Bezug auf den feststehenden Block (40) drehbar ist; ein Rad (35), das von dem Drehblock (50) durch eine Achse (38) gelagert ist, so dass das Rad (35) in Bezug auf den Drehblock (50) drehbar ist; ein Verriegelungselement (70), das auf dem Drehblock (50) derart gelagert ist, dass das Verriegelungselement (70) in Bezug auf den Drehblock (50) beweglich ist; und ein Schaltelement (60, 61), das in der Rollenachsenlinie (71) liegt und relativ zu der Rollenachsenlinie (71) in Bezug auf den feststehenden Block (40) und den Drehblock (50) beweglich ist; wobei das Verriegelungselement (70) gemäß der Bewegung des Schaltelementes (60, 61) entlang der Rollenachsenlinie (71) zwischen einer verriegelten Position, in welcher das Verriegelungselement (70) mit dem Rad (35) im Eingriff ist, um die Drehung des Rades (35) einzuschränken, und eine nichtverriegelten Position, in der das Verriegelungselement (70) von dem Rad (35) gelöst ist, beweglich ist, **dadurch gekennzeichnet, dass** das Schaltelement (60, 61) einen Schaftabschnitt aufweist, der sich entlang der Rollenachsenlinie (71) erstreckt, sowie einen ebenen Eingriffsabschnitt, der an dem Schaftabschnitt angebracht ist und sich in einer Richtung erstreckt, die nicht parallel zu der Rollenachsenlinie (71) ist, und dass gemäß der Bewegung des Schaltelementes (60, 61) entlang der Rollenachsenlinie (71) das Verriegelungselement (70) durch den ebenen Eingriffsabschnitt des Schaltelementes (60, 61) gedrückt wird, so dass es in Bezug auf den Drehblock (50) bewegt wird.

2. Rolle (30, 31) nach Anspruch 1, wobei der feststehende Block (40) einen feststehenden Blockkörper (41) aufweist, der an dem Bein (15) des Kinderwagens angebracht ist, und einen Schaftabschnitt (46), der sich von dem feststehenden Blockkörper (41) nach unten erstreckt; wobei der Drehblock (50) einen zylindrischen Halteabschnitt aufweist, durch den der Schaftabschnitt (46) des feststehenden Blocks (40) hindurch geht; und dass das Schaltelement (60, 61) so angeordnet ist, dass es durch den Schaftabschnitt (46) geht, so dass das Schaltelement (60, 61) in Bezug auf den Schaftabschnitt (46) verschiebbar ist.

3. Rolle (30, 31) nach Anspruch 2, wobei das Schaftelement (46) an dem feststehenden Blockkörper (41) über einen Befestigungsstift (48), der durch das Schaftelement (46) geht, befestigt ist; das Schaltelement (60, 61) einen Schaftabschnitt aufweist, der durch das Schaftelement (46) geht; der Schaftabschnitt ein Durchgangsloch (41A, 51A, 51B, 51, 62A, 62B, 71B, 80A, 8oB) aufweist, welches als ein Langloch (41A, 51A, 51B, 51, 62A, 62B, 71B, 80A, 80B) ausgebildet ist, welches sich in einer Richtung parallel zu der Rollenachsenlinie (71) erstreckt, wobei der Befestigungsstift (48) durch das Durchgangsloch (41A, 51A, 51B, 51, 62A, 62B, 71B, 80A, 80B) geht.

4. Rolle (30, 31) nach Anspruch 2 oder 3, wobei das Schaftelement (46) einen zylindrischen Körperabschnitt mit zylindrischer Form aufweist, und wobei ein Flanschabschnitt auf einem unteren Ende des zylindrischen Körperabschnitts angeordnet ist, wobei sich der Flanschabschnitt, von dem zylindrischen Körperabschnitt erstreckt, um einen Durchmesser zu vergrößern; und wobei der Flanschabschnitt so angeordnet ist, dass er einem unteren Ende des zylindrischen Halteabschnitts des Drehblocks (50) entlang einer Richtung parallel zu der Rollenachsenlinie (71) zugewandt ist.

5. Rolle (30, 31) nach einem der Ansprüche 2 bis 4, wobei ein ringförmiger Bodenplattenabschnitt an einem unteren Ende des zylindrischen Halteabschnittes des Drehblocks (50) ausgebildet ist und sich der ringförmige Bodenplattenabschnitt von dem zylindrischen Halteabschnitt erstreckt, um einen Durchmesser zu verringern; und wobei eine Hülse (39), durch welche das Schaftelement (46) hindurchgeht, vorgesehen ist, wobei die Hülse (39) so positioniert ist, dass sie dem zylindrischen Halteabschnitt des Drehblocks (50) und dem kreisförmigen Bodenabschnitt des Drehblocks (50) zugewandt ist.

6. Rolle (30, 31) nach einem der Ansprüche 1 bis 5, wobei der ebene Eingriffsabschnitt scheibenförmig ist.

7. Rolle (30, 31) nach Anspruch 5 oder 6, wobei das Verriegelungselement (70) einen Vorsprung (75) aufweist, der zu einer Position vorspringt, die dem ebenen Eingriffsabschnitt entlang einer Richtung parallel zu der Rollenachsenlinie (71) zugewandt ist.

8. Rolle nach einem der Ansprüche 1 bis 7, wobei das Verriegelungselement (70) in Bezug auf den Drehblock (50) in einer Richtung parallel zu der Rollenachsenlinie (71) beweglich ist.

9. Rolle (30, 31) nach einem der Ansprüche 1 bis 8, wobei das Verriegelungselement (70) einen Verriegelungskörperabschnitt aufweist, der in Bezug auf den Drehblock (50) relativ beweglich ist, sowie ein Verriegelungsstift (736, 73), der auf dem Verriegelungskörperabschnitt gehalten ist;
wobei der Drehblock (50) ein Gehäuse (51) aufweist, das den Verriegelungskörperabschnitt derart aufnimmt, dass der Verriegelungskörperabschnitt in dem Gehäuse beweglich ist;
wobei das Gehäuse (51) ein Durchgangsloch (41A, 51A, 51B, 51, 62A, 62B, 71B, 80A, 80B) aufweist, durch das der Verriegelungsstift (736, 73) geht, wobei sich das Durchgangsloch (41A, 51A, 51B, 51, 62A, 62B, 71B, 80A, 80B) in einer Relativbewegungsrichtung des Verriegelungskörperabschnitts in Bezug auf den Drehblock (50) erstreckt;
und wobei dann, wenn das Verriegelungselement (70) in der verriegelten Position ist, der Verriegelungsstift (763, 73) mit dem Rad (35) im Eingriff ist, um die Drehung des Rades (35) einzuschränken, und dann, wenn das Verriegelungselement (70) in der nicht verriegelten Position ist, der Verriegelungsstift (736, 73) von dem Rad (35) gelöst ist.

10. Rolle (30, 31) nach Anspruch 9, wobei
der Verriegelungskörperabschnitt in Bezug auf das Gehäuse (51) beweglich gelagert ist und eine Rohrform hat, wobei beide Enden in der Bewegungsrichtung des Verriegelungskörperabschnitts offen sind;
ein Halteelement (80) derart angeordnet ist, dass wenigstens ein Teil des Halteelements (80) innerhalb des Verriegelungskörperabschnitts liegt; und
die Achse (38) durch das Gehäuse (51) und das Halteelement (80) geht.

11. Rolle (30, 31) nach Anspruch 10, wobei das Gehäuse (51) ein Durchgangsloch (41A, 51A, 51B, 51, 62A, 62B, 71B, 80A, 80B) aufweist, durch welches die Achse (38) hindurchgeht, wobei das Durchgangsloch (41A, 51A, 51B, 51, 62A, 62B, 71B, 80A, 80B) sich in der Relativbewegungsrichtung des Verriegelungskörperabschnitts in Bezug auf das Gehäuse (51) erstreckt, und wobei das Halteelement (80) zusammen mit der von dem Halteelement (80) gehaltenen Achse (38) in Bezug auf das Gehäuse (51) in einer Richtung parallel zu der Relativbewegungsrichtung des Verriegelungskörperabschnittes in Bezug auf das Gehäuse (51) beweglich ist.

12. Rolle (30, 31) nach Anspruch 10 oder 11, wobei das Haltelement (80) ein Durchgangsloch (41A, 51A, 51B, 51, 62A, 62B, 71B, 80A, 80B) aufweist, das sich in der Bewegungsrichtung des Verriegelungskörperabschnitts erstreckt, wobei der Verriegelungsstift (736, 73) durch das Durchgangsloch (41A, 51A, 51B, 51, 62A, 62B, 71B, 80A, 80B) geht.

13. Rolle (30, 31) nach einem der Ansprüche 10 bis 12, wobei der Verriegelungskörperabschnitt einen Ausschnitt (71A) hat, in der sich die Achse (38) gemäß der Bewegung des Verriegelungskörperabschnitts bewegt.

14. Kinderwagen (10) mit einem Griff (18), einem vorderen Bein (14) und einem hinteren Bein (15); und einer Rolle (30, 31) nach einem der Ansprüche 1 bis 13, die an wenigstens dem vorderen Bein (14) oder dem hinteren Bein (15) montiert ist.

## Revendications

1. Roulette (30, 31) comprenant :
un bloc fixe (40) fixé à une jambe (15) d'une poussette (10) ; un bloc rotatif (50) raccordé au bloc fixe (40) de sorte que le bloc rotatif (50) peut tourner autour d'une ligne d'axe de roulette (71) par rapport au bloc fixe (40) ; une roue (35) supportée par le bloc rotatif (50) par le biais d'un essieu (38) de sorte que la roue (35) peut tourner par rapport au bloc rotatif (50) ; un élément de blocage (70) supporté par le bloc rotatif (50) de sorte que l'élément de blocage (70) est relativement mobile par rapport au bloc rotatif (50) ; et un élément de commutation (60, 61) positionné sur la ligne d'axe de roulette (71) et relativement mobile le long de la ligne d'axe de roulette (71) par rapport au bloc fixe (40) et au bloc rotatif (50) ; dans laquelle l'élément de blocage (70) est mobile selon le mouvement de l'élément de commutation (60, 61) le long de la ligne d'axe de roulette (71) entre une position bloquée dans laquelle l'élément de blocage (70) est mis en prise avec la roue (35) afin de limiter une rotation de la roue (35) et une position débloquée dans laquelle l'élément de blocage (70) est dégagé de la roue (35), **caractérisée en ce que** l'élément de commutation (60, 61) comprend une partie d'arbre s'étendant le long de la ligne d'axe de roulette (71) et une partie planaire de mise en prise fixée à la partie d'arbre et s'étendant dans une direction non parallèle à la ligne d'axe de roulette (71), et selon le mouvement de l'élément de commutation (60, 61) le long de la ligne d'axe de roulette (71), l'élément de blocage (70) est comprimé par la partie planaire de mise en prise de l'élément de commutation (60, 61) afin d'être relativement déplacé par rapport au bloc rotatif (50).

2. Roulette (30, 31) selon la revendication 1, dans laquelle le bloc fixe (40) comprend un corps de bloc fixe (41) fixé sur la jambe (15) de la poussette (10) et un élément d'arbre (46) s'étendant vers le bas à partir du corps de bloc fixe (41) ; le bloc rotatif (50) comprend une partie de support tubulaire à travers laquelle l'élément d'arbre (46) du bloc fixe (40) passe ; et l'élément de commutation (60, 61) est positionné pour passer à travers l'élément d'arbre (46) de sorte que l'élément de commutation (60, 61) peut coulisser par rapport à l'élément d'arbre (46).

3. Roulette (30, 31) selon la revendication 2, dans laquelle l'élément d'arbre (46) est fixé au corps de bloc fixe (41) par le biais d'une goupille de fixation (48) passant à travers l'élément d'arbre (46) ; l'élément de commutation (60, 61) comprend une partie d'arbre passant à travers l'élément d'arbre (46) ; et la partie d'arbre a un trou débouchant (41A, 51A, 51B, 51, 62A, 62B, 71B, 80A, 80B) formé comme un trou allongé (41A, 51A, 51B, 51, 62A, 62B, 71B, 80A, 80B) s'étendant dans une direction parallèle à la ligne d'axe de roulette (71) avec la goupille de fixation (48) passant par le trou débouchant (41A, 51A, 51B, 51, 62A, 62B, 71B, 80A, 80B).

4. Roulette (30, 31) selon la revendication 2 ou 3, dans laquelle l'élément d'arbre (46) comprend une partie de corps cylindrique ayant une forme cylindrique et une partie de bride disposée sur une extrémité inférieure de la partie de corps cylindrique, la partie de bride s'étendant à partir de la partie de corps cylindrique afin d'augmenter un diamètre ; et la partie de bride est positionnée pour faire face à une extrémité inférieure de la partie de support tubulaire du bloc rotatif (50) le long d'une direction parallèle à la ligne d'axe de roulette (71).

5. Roulette (30, 31) selon l'une quelconque des revendications 2 à 4, dans laquelle une partie de plaque inférieure annulaire est formée sur une extrémité inférieure de la partie de support tubulaire du bloc rotatif (50), la partie de plaque inférieure annulaire s'étendant à partir de la partie de support tubulaire afin de réduire un diamètre ; et une douille (39) à travers laquelle l'élément d'arbre (46) passe, la douille (39) étant disposée dans une position faisant face à la partie de support tubulaire du bloc rotatif (50) et à la plaque inférieure annulaire du bloc rotatif (50).

6. Roulette (30, 31) selon l'une quelconque des revendications 1 à 5, dans laquelle la partie planaire de mise en prise a une forme discoïdale.

7. Roulette (30, 31) selon la revendication 5 ou 6, dans laquelle l'élément de blocage (70) comprend une pièce en saillie (75) faisant saillie dans une position faisant face à la partie planaire de mise en prise le long d'une direction parallèle à la ligne d'axe de roulette (71).

8. Roulette (30, 31) selon l'une quelconque des revendications 1 à 7, dans laquelle l'élément de blocage (70) est mobile par rapport au bloc rotatif (50) dans une direction parallèle à la ligne d'axe de roulette (71).

9. Roulette (30, 31) selon l'une quelconque des revendications 1 à 8, dans laquelle :
l'élément de blocage (70) comprend une partie de corps de blocage relativement mobile par rapport au bloc rotatif (50) et une goupille de blocage (736, 73) maintenue sur la partie de corps de blocage ;
le bloc rotatif (50) comprend un boîtier (51) logeant la partie de corps de blocage de sorte que la partie de corps de blocage est mobile à l'intérieur de ce dernier ;
le boîtier (51) a un trou débouchant (41A, 51A, 51B, 51, 62A, 62B, 71B, 80A, 80B) à travers lequel la goupille de blocage (736, 73) passe, le trou débouchant (41A, 51A, 51B, 51, 62A, 62B, 71B, 80A, 80B) s'étendant dans une direction de déplacement relative de la partie de corps de blocage par rapport au bloc rotatif (50) ; et lorsque l'élément de blocage (70) est positionné dans la position bloquée, la goupille de blocage (736, 73) est mise en prise avec la roue (35) afin de limiter la rotation de la roue (35) et lorsque l'élément de blocage (70) est positionné dans la position débloquée, la goupille de blocage (736, 73) est dégagée de la roue (35).

10. Roulette (30, 31) selon la revendication 9, dans laquelle :
la partie de corps de blocage est supportée, de manière mobile, par rapport au boîtier (51) et a une forme tubulaire ayant deux extrémités qui sont ouvertes dans la direction de déplacement de la partie de corps de blocage ;
un élément de support (80) est disposé de sorte qu'au moins une partie de l'élément de support (80) est positionnée à l'intérieur de la partie de corps de blocage ;
et l'essieu (38) passe à travers le boîtier (51) et l'élément de support (80).

11. Roulette (30, 31) selon la revendication 10, dans laquelle le boîtier (51) a un trou débouchant (41A, 51A, 51B, 51, 62A, 62B, 71B, 80A, 80B) à travers lequel l'essieu (38) passe, le trou débouchant (41A, 51A, 51B, 51, 62A, 62B, 71B, 80A, 80B) s'étendant dans la direction de déplacement relative de la partie de corps de blocage par rapport au boîtier (51) ; et l'élément de support (80) est mobile, conjointement avec l'essieu (38) supporté par l'élément de support (80) par rapport au boîtier (51) dans une direction parallèle à la direction de déplacement relative de la partie de corps de blocage par rapport au boîtier (51).

12. Roulette (30, 31) selon la revendication 10 ou 11, dans laquelle l'élément de support (80) a un trou débouchant (41A, 51A, 51B, 51, 62A, 62B, 71B, 80A, 80B) s'étendant dans la direction de déplacement de la partie de corps de blocage avec la goupille de blocage (736, 73) qui passe à travers le trou débouchant (41A, 51A, 51B, 51, 62A, 628, 71B, 80A, 80B).

13. Roulette (30, 31) selon l'une quelconque des revendications 10 à 12, dans laquelle la partie de corps de blocage a une découpe (71A) dans laquelle l'essieu (38) se déplace selon le mouvement de la partie de corps de blocage.

14. Poussette (10) comprenant une poignée (18), une jambe avant (14) et une jambe arrière (5) ; une roulette (30, 31) selon l'une quelconque des revendications 1 à 13, montée sur au moins l'une parmi la jambe avant (15) et la jambe arrière (15).
